# EUROPÄISCHE PATENTSCHRIFT

(11) **EP 3 183 851 B1**
(45) Veröffentlichungstag und Bekanntmachung des Hinweises auf die Patenterteilung: **25.10.2017**
(21) Anmeldenummer: 15753346.4
(22) Anmeldetag: 14.08.2015
(51) Int. Cl.: H04L 12/863, H04L 12/40, H04L 12/911, H04L 12/46, H04L 12/931

(54) **VERTEILERKNOTEN, AUTOMATISIERUNGSNETZ UND VERFAHREN ZUM ÜBERTRAGEN VON ECHTZEITRELEVANTEN UND NICHT-ECHTZEITRELEVANTEN DATENPAKETEN**
DISTRIBUTION NODE, AUTOMATION NETWORK, AND METHOD FOR TRANSMITTING REAL-TIME-RELEVANT AND NON-REAL-TIME RELEVANT DATA PACKETS
NOEUD DE DISTRIBUTION, RÉSEAU D'AUTOMATISATION ET PROCÉDÉ DE TRANSMISSION DE PAQUETS DE DONNÉES SENSIBLES AU TEMPS RÉEL ET NON SENSIBLES AU TEMPS RÉEL

(30) Priorität: 22.08.2014 DE 102014112082
(43) Veröffentlichungstag der Anmeldung: 28.06.2017
(73) Patentinhaber: Beckhoff Automation GmbH, 33415 Verl (DE)
(72) Erfinder: BUNTE, Thorsten, 33335 Gütersloh (DE); BÜTTNER, Holger, 12157 Berlin (DE); VONNAHME, Erik, 33154 Salzkotten (DE); BECKHOFF, Hans, 33415 Verl (DE); RETTIG, Thomas, 33378 Rheda-Wiedenbrück (DE); JANSSEN, Dirk, 33415 Verl (DE)
(74) Vertreter: Patentanwaltskanzlei WILHELM & BECK
(86) Internationale Anmeldenummer: PCT/EP2015/068757
(87) Internationale Veröffentlichungsnummer: WO 2016/026783

(56) Entgegenhaltungen:
- EP-A1- 1 512 254
- EP-A1- 2 515 492
- DE-A1- 10 249 851
- KR-A- 20080 055 201
- FREITAS FRANCISCO FRANCISCO A L ET AL: "Fault-Tolerant Hard-Real-Time Communication of Dynamically Reconfigurable, Distributed Embedded Systems", OBJECT-ORIENTED REAL-TIME DISTRIBUTED COMPUTING, 2005. ISORC 2005. EIG HTH IEEE INTERNATIONAL SYMPOSIUM ON SEATTLE, WA, USA 18-20 MAY 2005, PISCATAWAY, NJ, USA,IEEE, 18. Mai 2005 (2005-05-18), Seiten 275-283, XP010801262, DOI: 10.1109/ISORC.2005.27 ISBN: 978-0-7695-2356-9

## Beschreibung

Die Erfindung betrifft einen Verteilerknoten, ein Automatisierungsnetzwerk mit einem Verteilerknoten und ein Verfahren zum Übertragen von echtzeitrelevanten und nicht-echtzeitrelevanten Datenpaketen in einem Automatisierungsnetzwerk.

Lokale Kommunikationsnetzwerke, sogenannte "local area networks" (LANs), sind auf ein geografisches Gebiet begrenzt und setzen sich aus einem oder mehreren Servern und Arbeitsstationen, sogenannten Knoten, zusammen, die über ein Kommunikationsleitungsnetz, z.B. ein Koaxial-, Glasfaser- oder Twisted-Pair-Kabel miteinander verbunden sind. LANs werden mit einem Netzwerk-Betriebssystem und einem Netzwerk-Protokoll betrieben.

Der zur Zeit am weitesten verbreitete Standard für ein LAN-Netzwerk-Protokoll ist das Ethernet, mit dem sich Datenpakete, im Weiteren auch als Ethernet-Telegramm bezeichnet, mit Daten bis zu einer Länge von 1500 Bytes mit einer Geschwindigkeit im Gigabit-Bereich übertragen lassen. Das Ethernet-Protokoll wurde zuerst bei Bürokommunikationsnetzwerken eingesetzt. Aufgrund der Vorteile des Ethernet-Konzepts, die sich aus der Nutzung von Standard-Hardware- und - Softwarekomponenten sowie der Möglichkeit, auch bei einfacher Vernetzungstechnologie hohe Datenübertragungsraten zu erreichen, ergeben, wird die Ethernet-Netzwerkkommunikation neuerdings auch in der industriellen Fertigung überwiegend zum Datenaustausch und zum Durchführen von Steuerungsaufgaben verwendet.

Beim Einsatz von LANs in der Automatisierungstechnik muss insbesondere die Echtzeit-Fähigkeit des Netzwerk-Protokolls garantiert sein. Bei der Steuerung von Maschinen ist es erforderlich, dass eine zyklische Bearbeitung der Steuerungsaufgabe ohne zeitliche Schwankungen, d.h. mit nur geringen Abweichungen von der gewünschten Zykluszeit im Bereich weniger Mikrosekunden folgt, wobei mit einer vorhersehbaren Antwortzeit auf die Regelanforderung reagiert wird.

Um in LANs mit vielen Knoten, im Weiteren auch als Teilnehmer bezeichnet, die Durchlaufzeit der Datenpakete vom Sende- zum Empfangsknoten zu begrenzen und damit eine Echtzeit-Fähigkeit erreichen zu können, sind solche LANs oft hierarchisch unter Verwendung von Verteilerknoten, sogenannten Switches, aufgebaut. Der Verteilerknoten weist mehrere Ein-/Ausgabe-Schnittstellen auf, über die mehrere Knoten oder Knotenstränge parallel in das Netzwerk eingebunden sind. Der Verteilerknoten untersucht dabei jedes auf einer Ein-/Ausgabe-Schnittstelle empfangene Datenpaket auf die Adresse des angesprochenen Teilnehmers und leitet dann das Datenpaket an den adressierten Teilnehmer über die zugeordnete Ein-/Ausgabe-Schnittstelle, an die der Teilnehmer angeschlossen ist, weiter.

Die Verteilerknoten arbeiten in der Regel nach dem FIFO-Prinzip, bei denen diejenigen Datenpakete, die zuerst empfangen wurden, auch zuerst wieder gesendet werden. Dies verhindert aber eine zuverlässige Echtzeitbearbeitung der Datenpakete. Neuere Verteilerknoten unterstützen deshalb oft das sogenannte VLAN-Tagging, mit dem einzelne Datenpakete beim Senden priorisiert werden können, um so eine Echtzeitfähigkeit zu gewährleisten.

Ferner sind auch Verteilerknoten bekannt, die aufgrund von protokollspezifischen Kennungen Datenpakete zu fest vorgegebenen Zeitpunkten versenden, um so eine Echtzeitbearbeitung zu ermöglichen. Im Verteilerknoten ist dann eine Vermittlereinrichtung mit einer Vermittlungstabelle, eine sogenannte Routingliste vorgesehen, die für jedes echtzeitrelevante Datenpaket in der Regel eine Datenpaketkennung, Empfangs- und Sende-Schnittstellen und ein Sendezeitpunkt enthält. In der Regel werden im Netzwerk neben den echtzeitrelevanten Datenpaketen, die zyklisch Ein-/ Ausgabedaten der Knoten übertragen, auch weitere nicht-echtzeitrelevante Datenpakete, die üblicherweise azyklisch Parameterdaten oder Statusdaten der Knoten übertragen, empfangen und gesendet. Für solche nicht-echtzeitrelevante Datenpakete ist in der Routingliste des Verteilerknotens dann kein Sendezeitpunkt vorgegeben.

Neben der Verwendung von Verteilerknoten als Switches, um mehrere Knoten oder Knotenstränge parallel in das Netzwerk einzubinden, kann ein Verteilerknoten auch als Synchronisierungs-Gateway für einen Master-Knoten eingesetzt werden. Der Verteilerknoten weist dann nur zwei Ein-/ Ausgabe-Schnittstellen zur Verbindung des Master-Knotens mit dem Netzwerk auf. Der zwischengeschaltete Verteilerknoten dient dann dazu, alle Datenpakete des Master-Knotens mit dem Netzwerk zu synchronisieren. Da die Durchleitung der Datenpakete von einer Ein-/ Ausgabe-Schnittstelle zur anderen Ein-/ Ausgabe-Schnittstelle im Verteilerknoten fest vorgeben ist, muss die Routingliste nur für jedes echtzeitrelevante Datenpaket ein Sendezeitpunkt enthalten.

Damit der Sendevorgang von nicht-echtzeitrelevanten Datenpaketen den Sendevorgang von echtzeitrelevanten Datenpaketen nicht verzögert, ist ein Datenübermittlungszyklus für die Datenpakete im Verteilerknoten in der Regel in drei Zeitabschnitte unterteilt. Eine solche Vorgehensweise ist in der US8179923B2 beschrieben. In einem ersten Zeitabschnitt, dem sogenannten zyklischen Zeitabschnitt, dürfen nur echtzeitrelevante Datenpakete empfangen und weitergeleitet werden. In dem sich daran anschließenden zweiten Zeitabschnitt, dem sogenannten azyklischen Zeitabschnitt, werden dann nicht-echtzeitrelevante Datenpakete übermittelt. In dem letzten dritten Zeitabschnitt, dem sogenannten Ubergangszeitabschnitt, dürfen dann zwar weiterhin alle Datenpakete empfangen, aber nicht mehr gesendet werden.

Der Ubergangszeitabschnitt, der wenigstens der maximalen Sendezeitdauer für ein nicht-echtzeitrelevantes Datenpaket entspricht, verhindert, dass es in dem daran anschließenden nächsten zyklischen Zeitabschnitt zu einem verzögerten Ubermitteln von echtzeitrelevanten Datenpakete durch eine noch in Gang befindlichen Sendevorgang eines nicht-echtzeitrelevanten Datenpakets kommt. Die im Übergangszeitabschnitt empfangenen nicht-echtzeitrelevanten Datenpakete werden im Verteilerknoten zwischengespeichert und im nächsten azyklischen Zeitabschnitt versandt.

Da jeder Knoten unkontrolliert nicht-echtzeitrelevanten Datenpakete außerhalb des zyklischen Zeitabschnitts, insbesondere auch in dem Übergangszeitabschnitt versenden kann, kommt es im Verteilerknoten leicht zu Überlastaituationen der nicht-echtzeitrelevanten Datenpakete. Solche Überlastsituationen treten insbesondere dann auf, wenn der azyklische Zeitabschnitt im Datenübermittlungszyklus gegenüber dem zyklischen Zeitabschnitt stark verkürzt ist. Aufgrund der Laufzeiten innerhalb des Netzwerks und um möglichst kurze Totzeiten bei der Datenübertragung zu erreichen, werden die echtzeitrelevanten Datenpakete oft nicht unmittelbar hintereinander im zyklischen Zeitabschnitt gesendet werden, sondern mit dazwischen liegenden Zeitlücken, wodurch sich der zyklischen Zeitabschnitt verlängert. In einem solchen Fall besteht dann die Gefahr, dass wenn in der Übergangszeitabschnitt und im azyklischen Zeitabschnitt zu viele nicht-echtzeitrelevante Datenpakete empfangen werden, der Empfangspuffer für die nicht-echtzeitrelevante Datenpakete im Verteilerknoten überläuft.

Aus FREITAS FRANCISCO FRANCISCO A L ET AL: "Fault-Tolerant Hard-Real-Time Communicatian of Dynamically Reconfigurable, Distributed Embedded Systems", OBJECT-ORIENTED REAL-TIME DISTRIBUTED COMPUTING, 2005. ISORC 2005. EIG HTH IEEE INTERNATIONAL SYMPOSIUM ON SEATTLE, WA, USA 18-20 MAY 2005, PISCATAWAY, NJ, USA, IEEE, 18. Mai 2005 (2005-05-18), Seiten 275-283 ist ein Verteilerknoten mit den Merkmalen des Oberbegriffs des Anspruchs 1 und ein Datenübertragungsverfahren mit den Merkmalen des Oberbegriffs des Anspruchs 4 bekannt. Die DE 102 49 851 A1 und die KR 2008 0055201 A beschreiben Datenübertragungsverfahren bei den echtzeitrelevanten und nicht-echtzeitrelevanten Datenpaketen in einem Datenübertagungszyklus übermittelt werden.
Aufgabe der Erfindung ist es einen Verteilerknoten, ein Automatisierungsnetzwerk und ein Datenübertragungsverfahren zum einfachen und zuverlässigen Übertragen von echtzeitrelevanten und nicht-echtzeitrelevanten Datenpaketen bereitzustellen.

Diese Aufgabe wird durch einen Verteilerknoten nach Anspruch 1, ein Automatisierungsnetzwerk nach Anspruch 3 und ein Datenübertragungsverfahren gemäß Anspruch 4 gelöst. Bevorzugte Weiterbildungen sind in den abhängigen Anspruchen angegeben.

Erfindungsgemäß weist ein Verteilerknoten in einem Automatisierungsnetzwerk wenigstens zwei Ein-/Ausgabe-Schnittstellen zum Senden und Empfangen von echtzeitrelevanten und nicht-echtzeitrelevanten Datenpaketen und eine mit den zwei Ein-/Ausgabe-Schnittstellen verbundene Vermittlungseinrichtung auf. Die Vermittlungseinrichtung versendet über eine Ein-/Ausgabe-Schnittstelle empfangene Datenpakete über eine weitere Ein-/Ausgabe-Schnittstelle mit Hilfe einer Vermittlungstabelle, wobei die Vermittlungstabelle für jedes echtzeitrelevante Datenpaket wenigstens einen Sendezeitpunkt enthält. Die Vermittlungseinrichtung erfasst weiter beim Empfang eines nicht-echtzeitrelevanten Datenpakets die Länge des nicht-echtzeitrelevanten Datenpakets, um die sich daraus ergebende Sendezeitdauer für das nicht-echtzeitrelevanten Datenpaket zu ermitteln. Ferner erfasst die Vermittlungseinrichtung zumindest dann, wenn eine Ein-/Ausgabe-Schnittstelle für ein nicht-echtzeitrelevantes Datenpaket als Sende-Schnittstelle vorgesehen ist und sich im sendefreien Zustand befindet, für die jeweilige Ein-/Ausgabe-Schnittstelle die bis zum Versenden des nächsten echtzeitrelevanten Datenpakets verbleibende Sendepausen-Zeitdauer und überprüft, ob für diese Ein-/Ausgabe-Schnittstelle als Sende-Schnittstelle ein nicht-echtzeitrelevantes Datenpaket mit einer Sendezeitdauer, die höchstens der Sendepausen-Zeitdauer entspricht, vorliegt, um bei einem positiven Prüfergebnis das nicht-echtzeitrelevante Datenpaket über die Ein-/Ausgabe-Schnittstelle zu versenden.

Mit der erfindungsgemäßen Vorgehensweise wird eine optimale Nutzung der möglichen Sendezeit der Ein-/ Ausgabe-Schnittstellen des Verteilerknotens ermöglicht, wobei die Totzeit beim Senden auf ein Minimum reduziert ist. Durch die optimale Datenübertragung kann so insbesondere auch die Gefahr eines Überlaufens der azyklisch im Verteilerknoten eintreffenden, nicht-echtzeitrelevanten Datenpakete verhindert werden.

Gemäß einer bevorzugten Ausführungsform wird der Verteilerknoten des Automatisierungsnetzwerks mit einem einzelnen Datenübermittlungszyklus betrieben. Es ist somit nicht mehr notwendig, den Datenübermittlungszyklus in Zeitabschnitte zu unterteilen und dabei dafür zu sorgen, dass in bestimmten Zeitabschnitten des Datenübermittlungszyklus ein Versenden von nicht-echtzeitrelevanten Datenpaketen unterbleibt. Das Versenden der nicht-echtzeitrelevanten Datenpakete kann dann über die gesamte Zykluszeit verteilt erfolgen, und zwar immer dann, wenn eine Sendepausen-Zeitdauer der zugeordneten Sende-Schnittstelle wenigstens der Sendezeitdauer eines nicht-echtzeitrelevanten Datenpakets entspricht.

Gemäß einer bevorzugten Ausführungsform der Erfindung wird ein nicht-echtzeitrelevantes Datenpaket zwischengespeichert, wenn die zugeordnete Sende-Schnittstelle zum Versenden des nicht-echtzeitrelevanten Datenpakets nicht freigegeben ist. Dabei kann so vorgegangen werden, dass beim Empfang des nicht-echtzeitrelevanten Datenpakets überprüft wird, ob die zugeordnete Sende-Schnittstelle bis zum Senden des nächsten echtzeitrelevanten Datenpakets für die sich aus der Länge des echtzeitrelevanten Datenpakets ergebende Sendezeitdauer frei ist. Bei einem positiven Prüfungsergebnis wird das nicht-echtzeitrelevante Datenpaket über die zugeordnete Sende-Schnittstelle versandt. Bei einem negativen Prüfungsergebnis wird das nicht-echtzeitrelevante Datenpaket dagegen zwischengespeichert. Mit dieser Vorgehensweise wird eine effektive und ressourcenschonende Verarbeitung nicht-echtzeitrelevanter Datenpakete in den Verteilerknoten realisiert. Im Verteilerknoten eintreffende nicht-echtzeitrelevante Datenpakete werden ohne Verzögerung so schnell wie möglich weitergeleitet, wenn Sendezeit frei ist.

Gemäß einer weiteren bevorzugten Ausführungsform wird die Sendepausen-Zeitdauer einer zum Senden freien Ein-/ Ausgabe-Schnittstelle mit der Sendezeitdauer der der Ein-/ Ausgabe-Schnittstelle als Sende-Schnittstelle zugeordneten, im Verteilerknoten vorliegenden nicht-echtzeitrelevanten Datenpaketen verglichen, um aus den nicht-echtzeitrelevanten Datenpaketen, deren Sendezeitdauer höchstens der Sende-Zeitdauer entspricht, nach einem vorgegebenen Kriterium ein zu versendendes nicht-echtzeitrelevantes Datenpaket auszuwählen. Mit dieser Vorgehensweise kann für eine zum Senden freie Ein-/ Ausgabe-Schnittstelle aus den im Vermittlerknoten vorliegenden nicht-echtzeitrelevanten Datenpakete ein für den Sendevorgang optimales Datenpaket ausgewählt werden. Dabei wird dann insbesondere das nicht-echtzeitrelevante Datenpaket ausgewählt, dessen Sendezeitdauer der Sendepausenzeit der Sende-Schnittstelle am nächsten kommt. Mit dieser Vorgehensweise wird die Sendezeit der Ein-Ausgabe-Schnittstellen im Vermittlerknoten bestmöglich ausgenutzt und damit die Gefahr von Überlastsituationen in Bezug auf nicht-echtzeitrelevante Datenpakete weiter reduziert. Alternativ oder zusätzlich zur Sendezeitdauer besteht auch die Möglichkeit, weitere Kriterien bei der Auswahl eines nicht-echtzeitrelevanten Datenpakets zum Versenden auf einer freien Sende-Schnittstelle vorzusehen, insbesondere die Verweildauer im Verteilerknoten.

Gemäß einer weiteren bevorzugten Ausführungsform sind die Datenpakete Ethernet-Telegramme, wobei bei nicht echtzeitfähigen Ethernet-Telegrammen in einem Kopfabschnitt des Datenbereichs ein Datenfeld für die Längeninformation vorgesehen ist. Mit dieser Vorgehensweise ist keine Modifizierung der im Verteilerknoten verarbeitbaren Ethernet-Telegramme in einer Übertragungsschicht des Automatisierungsnetzwerkes gegenüber herkömmlichen Ethernet-Telegrammen erforderlich. Die Längeninformation des nicht-echtzeitrelevanten Ethernet-Telegramms steckt im Datenbereich, der in einer übergeordneten Leitungsschicht des Automatisierungsnetzwerkes erzeugt wird. Die Längeninformation ist dabei vorzugsweise im Kopfabschnitt des Datenbereichs hinterlegt, sodass beim Empfang des nicht-echtzeitrelevanten Ethernet-Telegramms vom Vermittlerknoten bereits vor dem Empfang des gesamten Ethernet-Telegramms entschieden werden kann, ob aufgrund der Sendezeitdauer des Ethernet-Telegramms das Telegramm auf der dafür vorgesehenen Sende-Schnittstelle weitergesendet werden kann.

Alternativ kann bei einem nicht-echtzeitfähigen Ethernet-Telegramm auch bereits im Zieladressen-Abschnitt des Telegramm-Kopfes ein Datenfeld die Längeninformation enthalten sein. Durch die Unterbringung der Längeninformation im vordersten Telegrammbereich kann der Verteilerknoten bereits zum frühestmöglichen Zeitpunkt entscheiden, ob das Ethernet-Telegramm durch den Verteilerknoten durchgeleitet werden kann.

Die Erfindung wird anhand der nachfolgenden Zeichnungen näher erläutert. Es zeigen:
Figur 1 ein erfindungsgemäßes Automatisierungsnetzwerk mit einem Verteilerknoten in schematischer Darstellung;
Figur 2 einen erfindungsgemäßen Verteilerknoten in schematischer Darstellung;
Figur 3A und 3B zwei Ausführungsformen eines nicht-echtzeitrelevanten Datenpakets als Ethernet-Telegramm mit einem Datenfeld für eine Längeninformation; und
Figur 4A, 4B, 4C eine Datenpaket-Durchleitung bei dem in Figur 2 gezeigten Verteilerknoten, wobei Figur 4A eine Routingliste für vier echtzeitrelevante Datenpakete und drei nicht-echtzeitrelevante Datenpakete, Figur 4B eine erste mögliche Vorgehensweise bei der Datenpaket-Durchleitung und Figur 4C eine zweite Vorgehensweise bei der Datenpaket-Durchleitung wiedergibt.

In der Industrieautomation werden Automatisierungsnetzwerke eingesetzt, um verteilt angeordnete Geräte einer Aktor/Sensorebene mit einer Steuerungsebene zu verbinden. Die Automatisierungsnetzwerke, auch Feldbus-Systeme genannt, weisen einen seriellen Bus auf, an den alle Netzwerkteilnehmer, im Weiteren auch Knoten genannt, angeschlossen sind. Die Feldbus-Systeme werden in der Regel als Master-Slave-Bussysteme betrieben. Die Master-Teilnehmer im Feldbus-System sind die Steuerungsknoten, die den Datenverkehr auf dem seriellen Bus regeln. Solche Master-Knoten sind zum Beispiel Industrie-PCs, die als Prozessleitrechner in Fertigungsstraßen dienen. Die Master-Knoten besitzen eine Buszugriffsberechtigung und können Daten auf den seriellen Bus ausgeben. Die Slave-Teilnehmer im Feldbus-System werden durch die Maschinenperipheriegeräte, wie zum Beispiel E/A-Geräte, Ventile, Antriebe, Sensoren, Messwertumformer gebildet. Sie besitzen in der Regel keine eigene Buszugriffsberechtigung, das heißt sie dürfen empfangene Daten nur quittieren und auf Aufforderung Daten über den Bus übermitteln.

Feldbus-Systeme können mit unterschiedlichen Netzwerkprotokollen betrieben werden. Als Kommunikationsstandard für Netzwerke hat sich dabei der Ethernet-Standard etabliert. Beim Ethernet-Konzept werden die Daten mit einem Kopfabschnitt, im Weiteren auch als Header bezeichnet, und einem Endabschnitt im Weiteren als Trailer bezeichnet, für den Transport von Knoten zu Knoten eingekapselt. Ethernet-Datenpakete, im Weiteren auch als Ethernet-Telegramme bezeichnet, weisen eine Datenlänge von bis zu 1500 Byte auf und lassen sich mit Geschwindigkeiten bis in den Gigabit-Bereich übertragen. Neben dem Ethernet-Protokoll können in Feldbus-Systemen jedoch auch andere Protokolle, insbesondere Feldbusprotokolle wie Profinet oder EtherCAT eingesetzt werden.

Auch kann in Feldbus-Systemen als Anwendungssoftware auf Teilnehmerebene ein bestimmtes Netzwerkprotokoll und auf der Busebene ein anderes Netzwerkprotokoll eingesetzt werden. In diesem Fall werden beim Datenaustausch über den Feldbus die auf der Teilnehmerebene erzeugten Datenpakete, die mit dem einen Netzwerkprotokoll hergestellt wurden, auf der Busebene für den Inter-Knoten-Datenverkehr in dem anderen Netzwerkprotokoll eingekapselt. So wird dann zum Beispiel, wenn als übergeordnetes Netzwerkprotokoll für den Datenaustausch zwischen den Knoten das Ethernet-Protokoll eingesetzt wird, das mit einem Feldbusprotokoll wie Profinet oder EtherCAT erzeugte Datenpaket durch Hinzufügen eines Headers und eines Trailers verpackt, um ein Ethernet-Telegramm auszubilden.

In der Industrieautomation erfolgt die Steuerung mithilfe eines Datenaustauschs über Feldbus-Systeme in der Regel so, dass der Master-Knoten zyklisch Steuerprozesse durchführt, um auf der Grundlage von Eingangsdaten bei Slave-Knoten Ausgangsdaten für diese Slave-Knoten zu erzeugen. Der Master-Knoten verschickt nach dem Abschluss eines Steuerprozess-Zyklus die Ausgangsdaten dann in Form von Datenpaketen auf dem Feldbus, wobei die Slave-Knoten die dem jeweiligen Knoten zugeordneten Ausgangsdaten aus den Datenpaketen entnehmen und mit diesen Ausgangsdaten einen lokalen Knotenprozess ausführen. Die vom lokalen Knotenprozess ermittelten Daten werden dann wiederum vom Slave-Knoten an den Master-Knoten zurückgeschickt und anschließend als Eingangsdaten für den nächsten Steuerprozess-Zyklus vom Master-Knoten genutzt.

Um schnelle Regelungsvorgänge in der Industrieautomation mithilfe von Feldbus-Systemen durchführen zu können, muss eine kurze Umlaufzeit der Datenpakete garantiert werden, damit eine Echtzeitausführung des Steuerprozesses erreicht wird. In Feldbus-Systemen mit vielen Knoten werden, um die Laufzeit der Datenpakete vom Sende- zum Empfangsknoten zu verkürzen, Verzweigungen eingesetzt. Das Feldbus-System weist dann in der Datenübertragungsstrecke einen Verteilerknoten, im Weiteren auch als Switch bezeichnet, auf, an dem mehrere unabhängige Datenpfade angeschlossen sind.

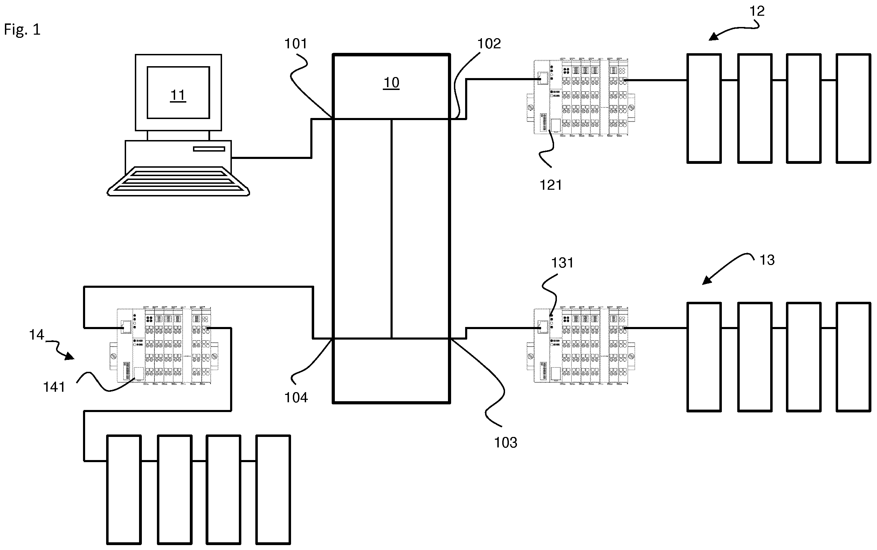

Figur 1 zeigt in schematischer Darstellung ein solches Feldbus-System mit einem Verteilerknoten 10, der vier Ein-/ Ausgabe-Schnittstellen 101, 102, 103, 104 aufweist. Es besteht jedoch die Möglichkeit, statt vier Ein-/ Ausgabe-Schnittstellen mehr oder weniger Ein-/ Ausgabe-Schnittstellen vorzusehen. So kann der Verteilerknoten dann, wenn er z.B. als Synchronisierungs-Gateway für einen Master-Knoten eingesetzt wird, auch nur zwei Ein-/ Ausgabe-Schnittstellen aufweisen. Die Anforderungen an die Sendegenauigkeit des Master-Knotens können bei der Zwischenschaltung eines solchen Verteilerknoten zwischen den Master-Knoten und das Netzwerk dann reduziert sein. Der zwischengeschaltete Verteilerknoten synchronisiert alle vom Datenpakete des Master-Knotens mit dem Netzwerk.

Bei der in Figur 1 gezeigten Auslegung des Verteilerknotens 10 ist eine erste Ein-/ Ausgabe-Schnittstelle 101 mit einem Master-Knoten 11 verbunden. An die weiteren drei Ein-/ Ausgabe-Schnittstellen 102, 103, 104 ist jeweils ein Slave-Knotenstrang 12, 13, 14 angeschlossen, der in der gezeigten Ausführungsform jeweils vier Slave-Knoten aufweist. Es können natürlich auch mehr oder weniger Slave-Knoten in jedem Slave-Knotenstrang zusammengeschlossen sein.

Bei der gezeigten Auslegung wird das Feldbus-System mit dem Ethernet-Protokoll betrieben, wobei die einzelnen Slave-Knoten aber mit dem EtherCAT-Protokoll arbeiten. Die mit dem EtherCAT-Protokoll betriebenen Slave-Knoten sind in jedem Slave-Knotenstrang über einen ringförmigen Datenpfad miteinander verbunden. Zwischen den Verteilerknoten 10 und den Slave-Knotensträngen 12, 13, 14, ist jeweils ein EtherCAT-Koppler 121, 131, 141 geschaltet, der die vom Verteilerknoten 10 kommenden Ethernet-Telegramme ohne nennenswerte Verzögerung auf die Ringstruktur der nachgeordneten Slave-Knoten im Slave-Knotenstrang 12, 13, 14 umsetzt und die Ethernet-Telegramme nach dem Durchlauf durch die Ringstruktur des Slave-Knotenstrangs 12, 13, 14 dann wieder auf den Verteilerknoten 10 rückkoppelt. Diese Auslegung mit einem zwischengeschalteten EtherCAT-Koppler 121, 131, 141 hat den Vorteil, dass sich mehrere Slave-Knoten eine Ethernet-Anschaltung teilen und die Ethernet-Telegramme dann im Durchlauf mit einem reduzierten Hardware-Aufwand verarbeitet werden können.

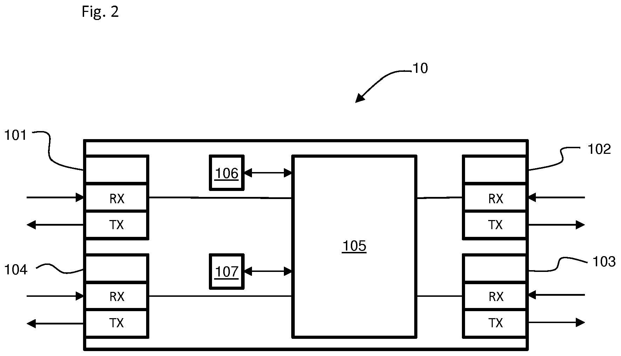

Figur 2 zeigt in schematischer Darstellung den Aufbau des Verteilerknotens 10. Die vier Ein-/ Ausgabe-Schnittstellen 101, 102, 103, 104 sind an eine Vermittlereinrichtung 105 angeschlossen. Jede Ein-/ Ausgabe-Schnittstelle 101, 102, 103, 104 weist eine Empfangseinheit RX und eine Sendeeinheit TX auf. In Figur 2 ist durch Pfeile die jeweilige Datenübertragungsrichtung der Empfangseinheit RX und der Sendeeinheit TX angezeigt. Die Vermittlungseinrichtung 105 steuert den Datenverkehr im Verteilerknoten 10.

Bei Feldbus-Systemen werden neben den Datenpaketen zwischen dem Master-Knoten und dem Slave-Knoten, die zur Durchführung von Steueraufgaben dienen und deren Datenverkehr zyklisch erfolgt, auch weitere Datenpakete in einem azyklischen Datenverkehr ausgetauscht. Der azyklische Datenverkehr wird für Ereignisse im Feldbus-System genutzt, die sich nicht ständig wiederholen. Azyklische Datenpakete sind zum Beispiel Datenpakete mit Parametrisierungs- und Konfigurationsdaten sowie Daten mit Diagnosemeldungen. Diese azyklischen Datenpakete sind im Gegensatz zu den zyklischen Datenpaketen nichtechtzeitrelevant, weshalb die zyklischen Datenpakete im Weiteren auch als echtzeitrelevante Datenpakete und die azyklischen Datenpakete auch als nicht-echtzeitrelevante Datenpakete bezeichnet werden.

Zur Steuerung der Datenpaket-Durchleitung durch den Verteilerknoten 10 ist die Vermittlungseinrichtung 105 mit einer Vermittlungstabelle 106, im Weiteren auch als Routingliste bezeichnet, verbunden. Die Routingliste 106 weist für jedes echtzeitrelevante Datenpaket eine Datenpaketkennung, eine Sende-Schnittstelle und einen Sendezeitpunkt und für jedes nicht-echtzeitrelevante Datenpaket eine Datenpaketkennung und eine Sende-Schnittstelle auf. Bei den nicht-echtzeitrelevanten Datenpaketen können dabei auch mehrere unterschiedliche Datenpakete die gleiche Datenpaketkennung besitzen. Es kann bei den nicht-echtzeitrelevanten Datenpaketen auch ganz auf die Datenpaketkennung verzichtet werden, da dies für das Routing nicht zwingend benötigt wird. Zusätzlich kann beispielsweise aber auch noch die Empfangs-Schnittstelle und der Empfangszeitpunkt sowohl für echtzeitrelevante als auch für nicht-echtzeitrelevante Datenpakete in der Routingliste angegeben sein.
Beim Empfang eines Datenpakets über die Empfangseinheit RX einer Ein-/ Ausgabe-Schnittstelle 101, 102, 103, 104 erfasst die Vermittlungseinrichtung 105 die Datenpaketkennung. Von der Vermittlungseinrichtung 105 aufgrund der Datenpaketkennung erkannte echtzeitrelevante Datenpakete werden dann über die für die Datenpaketkennung in der Routingliste 106 vermerkten Sende-Schnittstelle zu dem vorgegebenen Sendezeitpunkt ausgegeben.
Weist die Datenpaketkennung das empfangene Datenpaket als nicht-echtzeitrelevantes Datenpaket aus, ermittelt die Vermittlungseinrichtung 105 weiterhin die Länge des nicht-echtzeitrelevanten Datenpakets, um die sich daraus ergebende Sendezeitdauer für das nicht-echtzeitrelevante Datenpaket zu bestimmen. Dann, wenn das Routing der nicht-echtzeitrelevanten Datenpakete ohne Datenpaketkennung erfolgt, kann die Vermittlungseinrichtung 105 auch anhand anderer Kriterien, z.B. dem Nichtvorhandensein einer Datenpaketkennung feststellen, dass es sich einem empfangenen Datenpaket um nicht-echtzeitrelevante Datenpaket handelt. Die Vermittlungseinrichtung 105 prüft dann weiter, ob die dem nicht-echtzeitrelevanten Datenpaket in der Routingliste 106 zugeordnete Sende-Schnittstelle für einen Sendevorgang frei ist und ob die Sendepausen-Zeitdauer der Sende-Schnittstelle bis zum in der Routingliste 106 festgelegten Sendezeitpunkt des nächsten echtzeitrelevanten Datenpakets wenigstens der ermittelten Sendezeitdauer des nicht-echtzeitrelevanten Datenpakets entspricht.

Wenn ein positives Prüfungsergebnis anzeigt, dass die vorgesehene Sende-Schnittstelle für eine zum Versenden des nicht-echtzeitrelevanten Datenpaket ausreichende Zeitdauer nicht belegt ist, versendet die Vermittlungseinrichtung 105 dann das nicht-echtzeitrelevante Datenpaket über die Sendeeinheit TX der Sende-Schnittstelle. Im Falle eines negativen Prüfungsergebnisses, also dann wenn die Sendepausen-Zeitdauer der zum Senden vorgesehenen Sende-Schnittstelle kürzer ist als die Sendezeitdauer des nicht-echtzeitrelevanten Datenpakets, wird das nicht-echtzeitrelevante Datenpaket dagegen in einem Zwischenspeicher 107, der, wie in Figur 2 gezeigt ist, mit der Vermittlungseinrichtung 105 verbunden ist, abgelegt.

Die Vermittlungseinrichtung 105 ist grundsätzlich weiter so ausgelegt, dass für jede Ein-/ Ausgabe-Schnittstelle 101, 102, 103, 104 fortlaufend überprüft wird, ob die Ein-/ Ausgabe-Schnittstelle 101, 102, 103, 104 gerade sendet. Wenn ein sendefreier Status ermittelt wird, wird weiter die bis zum nächsten zu versendenden echtzeitrelevanten Datenpaket verbleibende Sendepausen-Zeitdauer erfasst. Die Vermittlungseinrichtung 105 überprüft dann weiter, ob im Zwischenspeicher 107 nicht-echtzeitrelevante Datenpakete vorliegen, die auf der entsprechenden Ein-/ Ausgabe-Schnittstelle 101, 102, 103, 104 versendet werden sollen und deren Sendezeitdauer höchstens der ermittelten Sendezeitpausen-Zeitdauer entspricht. Wenn mehrere solche nicht-echtzeitrelevante Datenpakete im Zwischenspeicher 107 enthalten sind, wird vorzugsweise so vorgegangen, dass das nicht-echtzeitrelevante Datenpaket zum Versenden ausgewählt wird, dessen Sendezeitdauer der Sendepausen-Zeitdauer am nächsten kommt. Statt einer fortlaufenden Überprüfung des sendefreien Zustandes kann die Vermittlungseinrichtung 105 auch immer nur dann die Überprüfung durchführen, wenn für die jeweilige Ein-/Ausgabe-Schnittstelle ein nicht-echtzeitrelevantes Datenpaket als Sende-Schnittstelle vorgesehen ist, also von der Vermittlungseinrichtung 105 gerade empfangen wurde oder im Zwischenspeicher 107 liegt.

Alternativ besteht auch die Möglichkeit, bei der Auswahl des nicht-echtzeitrelevanten Datenpakets, das versendet werden soll, weitere Kriterien, wie zum Beispiel die Zeitdauer der Zwischenspeicherung des nicht-echtzeitrelevanten Datenpakets zu berücksichtigen. So kann als Kriterium festgelegt werden, dass, wenn eine vorgegebene Speicherzeit bei einem nicht-echtzeitrelevanten Datenpaket überschritten ist, dieses nicht-echtzeitrelevanten Datenpaket statt dem nicht-echtzeitrelevanten Datenpaket mit einer Sendezeitdauer, die der Sendepausen-Zeitdauer bei Ein-/ Ausgabe-Schnittstellen am nächsten kommt, versendet wird, um zu gewährleisten, dass alle nicht-echtzeitrelevanten Datenpakete zeitnah übertragen werden, so dass deren Information dann im Rahmen der Steuerungsaufgabe dann auch zeitnah berücksichtigt werden kann.

Mit dieser Vorgehensweise werden die Sendezeiten der Ein-/ Ausgabe-Schnittstellen 101, 102, 103, 104 des Verteilerknotens 10 optimal ausgenutzt, wobei gleichzeitig für eine sichere und zuverlässige Datenübertragung gesorgt ist, die insbesondere auch die Echtzeitanforderungen im Rahmen eine Automatisierungssystems berücksichtigt.

Eine weitere alternative Vorgehensweise besteht darin, dass der Verteilerknoten 10 grundsätzlich alle nicht-echtzeitrelevanten Datenpakete, die er auf einer seiner Ein-/ Ausgabe-Schnittstellen 101, 102, 103, 104 empfängt, nach Feststellen der erforderlichen Sendezeitdauer im Zwischenspeicher 107 ablegt. Die Vermittlungseinrichtung 105 im Verteilerknoten ist dann so ausgelegt, dass die Vermittlungseinrichtung für jede Ein-/ Ausgabe-Schnittstelle 101, 102, 103, 104 den Sende-Status erfasst. Im sendefreien Zustand der jeweiligen Ein-/ Ausgabe-Schnittstelle 101, 102, 103, 104 ermittelt die Vermittlungseinrichtung 105 dann weiter die bis zum Versenden des nächsten echtzeitrelevanten Datenpakets verbleibende Sendepausen-Zeitdauer. Die Vermittlungseinrichtung 105 überprüft anschließend, ob im Zwischenspeicher 107 für diese Ein-/ Ausgabe-Schnittstelle 101, 102, 103, 104 nicht-echtzeitrelevante Datenpakete mit einer Sendezeitdauer, die höchstens der Sendepausen-Zeitdauer entspricht, vorliegen. Wenn nur ein nicht-echtzeitrelevantes Datenpaket ermittelt wird, wird dieses dann versandt. Wenn mehrere nicht-echtzeitrelevante Datenpakete die Sendezeitdauer-Bedingung erfüllen, wird gemäß eines bzw. mehrerer vorgegebener Kriterien ein nicht-echtzeitrelevantes Datenpaket ausgewählt und versandt. Bevorzugtes Auswahlkriterium ist dabei, wie vorstehend erläutert, vorzugsweise die Differenz zwischen jeweiliger Sendezeitdauer und der der Sendepausen-Zeitdauer. Es wird dann das nicht-echtzeitrelevante Datenpaket auf der Ein-/ Ausgabe-Schnittstelle 101, 102, 103, 104 versandt, das der erfassten Sendepausen-Zeitdauer am nächsten kommt. Ein weiteres Kriterium kann insbesondere die Verweildauer des nicht-echtzeitrelevanten Datenpakets im Verteilerknoten sein.

Die vorstehend erläuterte Datenübertragung in einem Master-Slave-Netzwerk mit einem Verteilerknoten 10, der den Datenverkehr von mehreren Knotensträngen miteinander verbindet, kann in einem einzelnen Datenübermittlungszyklus durchgeführt werden, im dem sowohl echtzeitrelevante Datenpakete als auch nicht-echtzeitrelevante Datenpakete übertragen werden. Die echtzeitrelevanten Datenpakete werden dabei, wie in der Routingliste 106 angegeben, über die zugeordneten Sende-Schnittstelle zu dem vorgegebenen Sendezeitpunkt versandt. Die nicht-echtzeitrelevanten Datenpakete werden dann in Sendepausen zwischen den nicht-echtzeitrelevanten Datenpaketen im Datenübermittlungszyklus übertragen, und zwar jeweils so, dass ein für die ermittelte Sendepausen-Zeitdauer optimales nicht-echtzeitrelevantes Datenpaket in dem Sendezeit-Zwischenraum übertragen wird.

Bei den nicht-echtzeitrelevanten Datenpaketen ermittelt die Vermittlungseinrichtung 105 im Verteilerknoten 10 beim Empfang des nicht-echtzeitrelevanten Datenpakets die Sendezeitdauer des Datenpakets aus einer im Datenpaket enthaltenen Längeninformation. Um dabei eine schnelle Verarbeitung des nicht-echtzeitrelevanten Datenpakets durch die Vermittlungseinrichtung zu ermöglichen, ist die Längeninformation vorzugsweise in einem ersten Abschnitt des Datenpakets enthalten. Die Vermittlungseinrichtung 105 kann dann das Datenfeld mit der Längeninformation bereits auswerten, bevor das gesamte Datenpaket über eine Ein-/ Ausgabe-Schnittstelle des Verteilerknoten 10 empfangen wurde, was den Verarbeitungsprozess zum Ermitteln des Sendezeitdauer des Datenpakets durch den Verteilerknoten beschleunigt.

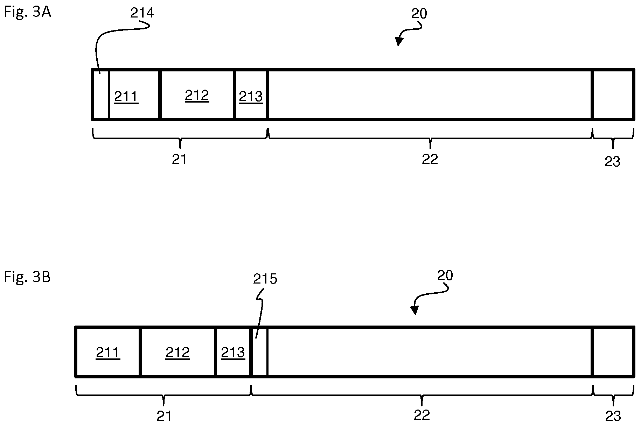

Die Figuren 3A und 3B zeigen zwei mögliche Ausführungsformen zur Übertragung der Längeninformation in einem Ethernet-Telegramm 20. Das Ethernet-Telegramm weist einen Datenbereich 22 mit einer Länge von bis zu 1.500 Byte auf, der von einem Kopfabschnitt 21, dem sogenannten Header, und einem Endabschnitt 23, dem sogenannten Trailer eingekapselt ist. Im Header, der 14 Byte lang ist, ist in einem ersten 6 Byte langen Datenfeld 211 die Zieladresse, in einem sich daran anschließenden ebenfalls 6 Byte langen Datenfeld 212 die Quelladresse und in einem 2 Byte langen Schluss-Datenfeld 213 der Ethernet-Typ angegeben. Der Trailer 23 besteht aus einem 4 Byte langen Datenfeld zur Übertragung einer Prüfsumme, um Fehler bei der Datenübertragung zu erkennen.

Wie in Figur 3A gezeigt ist, besteht die Möglichkeit beim Ethernet-Telegramm 20 die Längeninformation bereits im Header 21 mit zu übertragen und zwar in dem die Längeninformation im Datenfeld 211 mit der Zieladresse hinterlegt ist. Bevorzugt ist dabei für die Längeninformation ein erster Abschnitt 214 mit der Größe von 1 Byte im Zieladressen-Datenfeld 211 reserviert. Mit dieser Auslegung des Ethernet-Telegramms wird bereits zum frühestmöglichen Zeitpunkt die Längeninformation in einem nicht-echtzeitrelevanten Datenpaket übertragen, so dass die sich die durch die Auswertung der Längeninformation ergebende Verzögerung bei der Verarbeitung eines nicht-echtzeitrelevanten Datenpakets im Verteilerknoten 10 auf ein Minimum reduziert.

Alternativ kann, wie in Figur 3B gezeigt ist, ein Datenfeld 215 mit der Längeninformation auch im Datenbereich 22 des Ethernet-Telegramms vorgesehen sein.

Diese Auslegung eignet sich insbesondere dann, wenn mit dem Ethernet-Protokoll Datenpakete, die mit einem anderen Protokoll erzeugt wurden, getunnelt werden sollen, wie es bei dem in Figur 1 gezeigten Automatisierungsnetzwerk der Fall ist, bei dem die Knotenstränge 12, 13, 14 jeweils über den Koppler 121, 131, 141 an den Master-Knoten 11 angebunden ist. Der Master-Knoten 11 arbeitet mit dem Ethernet-Protokoll. Die Koppler 121, 131, 141 und die sich daran anschließenden Slave-Knoten nutzen als Anwendungssoftware ein Feldbusprotokoll, im vorliegenden Fall das EtherCAT-Protokoll. Das Datenfeld 215 mit der Längeninformation ist dann vorzugsweise in einem Datenfeld im Kopfabschnitt des Datenbereichs im Ethernet-Telegramms, wie in Figur 3B gezeigt, vorgesehen. Mit dieser Vorgehensweise besteht die Möglichkeit, die nicht-echtzeitrelevanten, mit einem Feldbus-Protokoll erzeugten Datenpakete als Ethernet-Telegramme ohne veränderten Header zu übertragen, wobei durch die Übertragung der Längeninformation im Kopfbereich des Datenbereichs eine schnelle Auswertung der Längeninformation nach dem Empfang des Ethernet-Telegramms möglich ist.

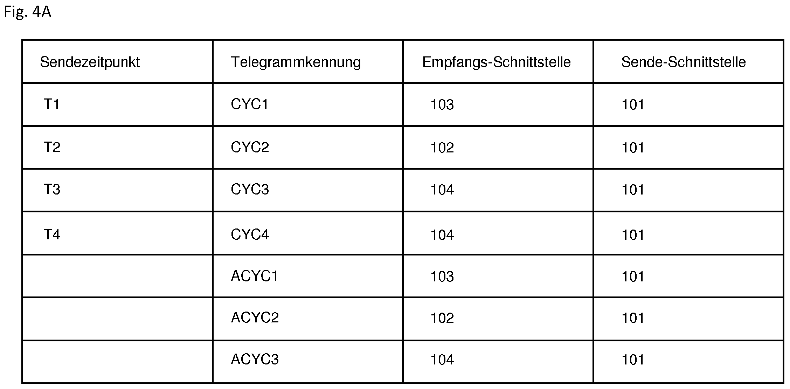

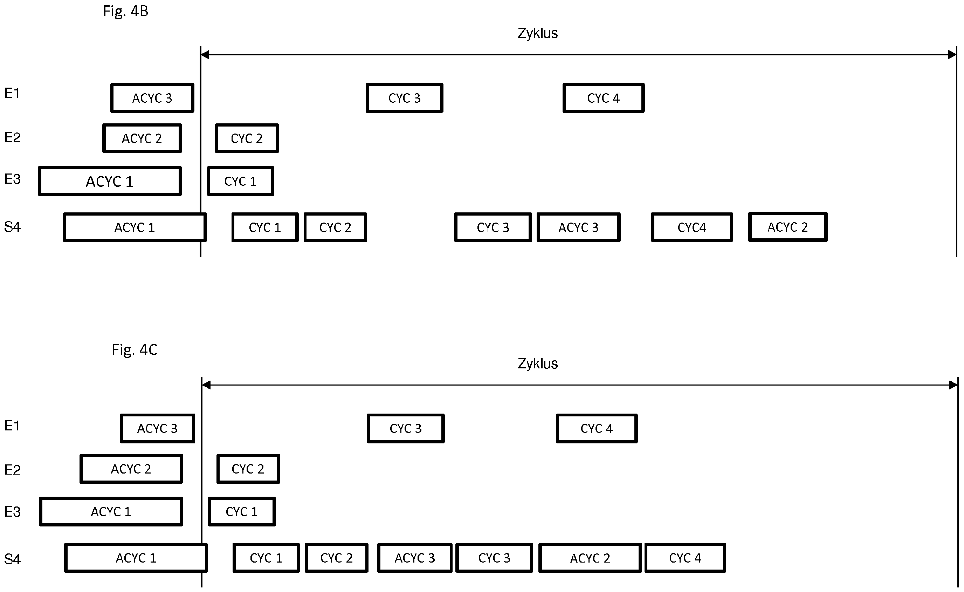

Die Figuren 4A, 4B und 4C zeigen beispielshaft zwei mögliche Vorgehensweisen bei der Übertragung zyklischer, das heißt echtzeitrelevanter Ethernet-Telegramme und azyklischer, das heißt nicht-echtzeitrelevanter Ethernet-Telegramme bei dem in Figur 1 gezeigten Automatisierungsnetzwerk. Durch den Verteilerknoten 10 hindurchgeschleust werden sollen dabei vier zyklische Ethernet-Telegramme CYC1, CYC2, CYC3, CYC4 und drei azyklische Ethernet-Telegramme, ACYC1, ACYC2, ACYC3. In Figur 4A ist eine mögliche Ausgestaltung der Routingliste 106 im Verteilerknoten 10 gezeigt. Die Routingliste 106 ist tabellenförmig aufgebaut mit den Spalten Sendezeitpunkt, Telegrammkennung, Empfangs-Schnittstelle und Sende-Schnittstelle. Sendezeitpunkte sind dabei nur für die zyklischen Ethernet-Telegramme CYC1, CYC2, CYC3, CYC4 angegeben.

Die Ethernet-Telegramme werden weiter gemäß der Routingliste 106 auf den drei Ein-/ Ausgabe-Schnittstelle 102, 103, 104, die jeweils an einen der drei Slave-Knotenstränge 12, 13, 14 angeschlossen sind, empfangen. Gesendet werden die Ethernet-Telegramme dann auf der Ein-/ Ausgabe-Schnittstelle 101, die mit dem Master-Knoten 11 verbunden ist.

Figur 4B zeigt auf einer Zeitachse den zeitlichen Verlauf von Empfangs- und Sendevorgang, wobei die Länge des Datenübermittlungszyklus eingetragen ist. Als erstes Ethernet-Telegramm wird das azyklische Ethernet-Telegramm ACYC1 auf der Ein-/ Ausgabe-Schnittstelle 103 als Empfangs-Schnittstelle vom Verteilerknoten 10 empfangen. Die Vermittlungseinrichtung 105 im Verteilerknoten 10 ermittelt dann aus der Längeninformation des azyklische Ethernet-Telegramms ACYC1 die Sendezeitdauer. Wie Figur 4B zeigt, ist diese Sendezeitdauer kürzer als die Sendepausen-Zeitdauer der als Sende-Schnittstelle vorgesehenen Ein-/ Ausgabe-Schnittstelle 101 bis zum Sendezeitpunkt des ersten zyklischen Telegramms CYC1 im Datenübermittlungszyklus. Das azyklische Ethernet-Telegramm ACYC1 wird deshalb vom Verteilerknoten auf der Ein-/ Ausgabe-Schnittstelle 101 sofort ausgegeben.

Zeitlich nach dem azyklischen Ethernet-Telegramm ACYC1 treffen dann die azyklischen Ethernet-Telegramme ACYC2 und ACYC3 auf den Ein-/ Ausgabe-Schnittstellen 102 und 103 als Empfang-Schnittstellen ein. Da jedoch deren von der Vermittlungseinrichtung 105 im Verteilerknoten 10 ermittelte Sendezeitdauer größer ist als die nach dem Senden des azyklischen Ethernet-Telegramms ACYC1 verbleibende Sendepausen-Zeitdauer der als Sende-Schnittstelle vorgesehenen Ein-/ Ausgabe-Schnittstelle 101 bis zum Sendezeitpunkt des ersten zyklischen Telegramms CYC1 im Datenübermittlungszyklus werden die azyklischen Ethernet-Telegramme ACYC2 und ACYC3 im Zwischenspeicher 107 abgelegt.

Wie Figur 4B weiter zeigt, werden auf der als Sende-Schnittstelle vorgesehenen Ein-/ Ausgabe-Schnittstelle 101 nach dem azyklischen Ethernet-Telegramm ACYC1 dann die auf den Ein-/ Ausgabe-Schnittstellen 102 und 103 als Empfang-Schnittstellen nach dem azyklischen Ethernet-Telegrammen empfangenen zyklischen Ethernet-Telegramme CYC1 und CYC2 an den in der Routingliste 106 eingetragenen Sendezeitpunkten vom Verteilerknoten 10 versandt. Zwischen den zyklischen Ethernet-Telegrammen CYC1 und CYC2 tritt keine Sendepausenzeit auf.

Eine weitere Sendepausenzeit ergibt sich dann auf der als Sende-Schnittstelle vorgesehenen Ein-/ Ausgabe-Schnittstelle 101 zwischen den zyklischen Ethernet-Telegrammen CYC2 und CYC3. Da diese Sendepausen-Zeitdauer kürzer ist als die Sendezeit des ersten zwischengespeicherten azyklischen Ethernet-Telegramms ACYC2 bleibt diese Sendepausenzeit frei und das azyklische Ethernet-Telegramm ACYC2 wird dann erst in der nächsten Sendepausen-Zeitdauer, die größer ist als die Sendezeitdauer des azyklischen Ethernet-Telegramms ACYC2 und sich zwischen den zyklischen Ethernet-Telegrammen CYC3 und CYC4 befindet, übertragen. Anschließend wird dann bis zum Zyklusende das letzte verbleibende azyklische Ethernet-Telegramm ACYC3 übertragen. Bei dieser Auslegung des Verteilerknotens werden die azyklischen Ethernet-Telegramme immer in der Reihenfolge, in der sie vom Verteilerknoten empfangen werden, wieder versandt und zwar immer dann, wenn eine entsprechende Sendepausen-Zeitdauer der als Sende-Schnittstelle vorgesehenen Ein-/ Ausgabe-Schnittstelle vorliegt.

Alternativ kann, wie in der Ausführungsform in Figur 4C gezeigt ist, von der Vermittlungseinrichtung 105 des VerteilerKnotens 10 eine Optimierung der Übertragung der azyklischen Ethernet-Telegramme in Bezug auf die vorliegende Sendepausen-Zeitdauer durchgeführt werden. Bei der in Figur 4C gezeigten Vorgehensweise wird im Gegensatz zu der Figur in 4B gezeigten Vorgehensweise zwischen dem zyklischen Ethernet-Telegrammen CYC2 und CYC3 das azyklische Ethernet-Telegramm ACYC3, das nach dem azyklischen Ethernet-Telegramm ACYC2 empfangen wurde und deshalb im Zwischenspeicher 107 in der Reihenfolge nach diesem azyklischen Ethernet-Telegramm eingespeichert ist, übertragen. Die Sendezeitdauer dieses später empfangenen azyklischen Ethernet-Telegramms ACYC3 ist kürzer als die Sendepausen-Zeitdauer zwischen den zyklischen Ethernet-Telegrammen CYC2 und CYC3. Die Übertragung des azyklischen Ethernet-Telegramms ACYC3 kann deshalb vor dem später empfangenen azyklischen Ethernet-Telegramm ACYC2, dessen Sendezeitdauer länger ist als die Sendepausen-Zeitdauer zwischen den zyklischen Ethernet-Telegrammen CYC2 und CYC3, durchgeführt werden.

Wenn der Verteilerknoten nicht als Switches, um mehrere Knoten oder Knotenstränge parallel in das Netzwerk einzubinden, sondern als Synchronisierungs-Gateway für einen Master-Knoten eingesetzt und dann nur zwei Ein-/ Ausgabe-Schnittstellen zur Verbindung des Master-Knotens mit dem Netzwerk aufweist, ist die Durchleitung der Datenpakete von einer Ein-/ Ausgabe-Schnittstelle zur anderen Ein-/ Ausgabe-Schnittstelle im Verteilerknoten fest vorgeben. Die Routingliste im Verteilerknoten muss dann nur für jedes echtzeitrelevante Datenpaket ein Sendezeitpunkt enthalten. Die Vermittlungseinrichtung erfasst dann, wenn eine nicht-echtzeitrelevantes Datenpaket in der Vermittlungseinrichtung vorhanden ist, ob die zum Durchleiten vorgesehene Ein-/ Ausgabe-Schnittstelle sich im sendefreien Zustand befindet und weiter die bis zum Versenden des nächsten echtzeitrelevanten Datenpakets verbleibende Sendepausen-Zeitdauer. Wenn für die Ein-/Ausgabe-Schnittstelle dann ein nicht-echtzeitrelevantes Datenpaket mit einer Sendezeitdauer, die höchstens der Sendepausen-Zeitdauer entspricht, vorliegt, versendet das Vermittlungseinrichtung das entsprechende nicht-echtzeitrelevante Datenpaket über die Ein-/Ausgabe-Schnittstelle.

Die Implementierung der Datenübertragung im Verteilerknoten 10 erfolgt dabei vorzugsweise im Rahmen der Konfigurationsphase des Automatisierungsnetzwerks durch den Master-Knoten 11. Die Routingliste 106 wird dabei dem Verteilerknoten 10 vom Master-Knoten 11 vorgeben. Da im als Master-Slave-System ausgeführten Automatisierungsnetzwerk zyklische Ethernet-Telegramme sowohl vom Master-Knoten als auch von den Slave-Knoten gesendet werden dürfen, azyklische Ethernet-Telegramme dagegen nur vom Master-Knoten kann durch eine entsprechende Auslegung der Routingliste 106 im Verteilerknoten 10 in der Konfigurationsphase eine Überlastsituation in Bezug auf die azyklischen Ethernet-Telegramme grundsätzlich vermieden werden. Der Master-Knoten 11 kennt nämlich die gemäß der Routingliste 106 verbleibende Netzkapazität für azyklische Ethernet-Telegramme und kann dann das Senden der azyklischen Ethernet-Telegramme entsprechend steuern.

## Patentansprüche

1. Verteilerknoten (10) für ein Automatisierungsnetzwerk mit
wenigstens zwei Ein-/Ausgabe-Schnittstellen (101, 102, 103, 104) zum Senden und Empfangen von echtzeitrelevanten und nicht-echtzeitrelevanten Datenpaketen, die jeweils eine Empfangseinheit (RX) zum Empfangen von Datenpaketen, und eine Sendeeinheit (TX) zum Senden von Datenpaketen aufweisen, und einer mit den Ein-/Ausgabe-Schnittstellen verbundenen Vermittlungseinrichtung (105), die eine Vermittlungstabelle (106) umfasst,
wobei die Vermittlungseinrichtung (105) ausgelegt ist,
über eine Ein-/Ausgabe-Schnittstelle empfangene Datenpakete über eine weitere Ein-/Ausgabe-Schnittstelle mit Hilfe der Vermittlungstabelle (106) zu versenden,
wobei die Vermittlungstabelle für jedes echtzeitrelevante Datenpaket wenigstens eine Datenpaketkennung und einen Sendezeitpunkt in einem Datenübermittlungszyklus enthält,
wobei die Vermittlungseinrichtung (105) ausgelegt ist, beim Empfang eines echtzeitrelevanten Datenpakets eine Datenpaketkennung zu erfassen,
wobei die Vermittlungseinrichtung (105) ausgelegt ist, das echtzeitrelevante Datenpaket zu dem der erfassten Datenpaketkennung in der Vermittlungstabelle (106) zugeordneten Sendezeitpunkt über eine als Sende-Schnittstelle vorgesehene Ein-/Ausgabe-Schnittstelle auszugeben, **dadurch gekennzeichnet,**
**dass** die Vermittlungseinrichtung (105) ausgelegt ist, beim Empfang eines nicht-echtzeitrelevanten Datenpakets die Länge des nicht-echtzeitrelevanten Datenpakets zu erfassen, um die sich daraus ergebende Sendezeitdauer für das nicht-echtzeitrelevante Datenpaket zu ermitteln,
**dass** die Vermittlungseinrichtung (105) ausgelegt ist, zumindest dann, wenn in der Vermittlungstabelle (106) eine Ein-/Ausgabe-Schnittstelle für ein nicht-echtzeitrelevantes Datenpaket als Sende-Schnittstelle vorgesehen ist und die Ein-/Ausgabe-Schnittstelle sich im sendefreien Zustand befindet, für die jeweilige Ein-/Ausgabe-Schnittstelle die bis zum Versenden des nächsten echtzeitrelevanten Datenpakets verbleibende Sendepausen-Zeitdauer zu erfassen und zu überprüfen, ob für die Ein-/Ausgabe-Schnittstelle als Sende-Schnittstelle ein nicht-echtzeitrelevantes Datenpaket mit einer Sendezeitdauer, die höchstens der Sendepausen-Zeitdauer entspricht, vorliegt, um bei einem positiven Prüfergebnis ein nicht-echtzeitrelevantes Datenpaket über die Ein-/Ausgabe-Schnittstelle zu versenden,
**dass** die Vermittlungseinrichtung (105) ausgelegt ist, ein nicht-echtzeitrelevantes Datenpaket zwischenzuspeichern, wenn die in der Vermittlungstabelle (106) zugeordnete Sende-Schnittstelle des nicht-echtzeitrelevanten Datenpakets zum Versenden nicht freigegeben ist, und
**dass** die Vermittlungseinrichtung (105) ausgelegt ist, die die Sendepausen-Zeitdauer einer zum Senden freien Ein-/Ausgabe-Schnittstelle mit der Sendezeitdauer von der Ein-/Ausgabe-Schnittstelle in der Vermittlungstabelle (106) als Sende-Schnittstelle zugeordneten, in der Vermittlungseinrichtung vorliegenden nicht-echtzeitrelevanten Datenpaketen zu vergleichen, um aus den nicht-echtzeitrelevanten Datenpaketen, deren Sendezeitdauer höchstens der Sendepausen-Zeitdauer entspricht, nach wenigstens einem vorgegebenen Kriterium ein zu versendendes nicht-echtzeitrelevantes Datenpaket auszuwählen.

2. Verteilerknoten nach Anspruch 1, wobei ein Auswahlkriterium die Sendezeitdauer und/oder eine Verweildauer im Verteilerknoten ist.

3. Automatisierungsnetzwerk mit einem Verteilerknoten (10) nach Anspruch 1 oder 2, wobei jede Ein-/Ausgabe-Schnittstellen (101, 102, 103, 104) mit wenigstens einem Knoten (11, 12, 13, 14) verbunden ist und wobei die Datenübermittlung der echtzeitrelevanten und der nicht-echtzeitrelevanten Datenpakete mit dem einzelnen Datenübermittlungszyklus erfolgt.

4. Verfahren zum Übertragen von echtzeitrelevanten und nicht-echtzeitrelevanten Datenpaketen in einem Automatisierungsnetzwerk mit mehreren Knoten (11, 12, 13, 14) und einem Verteilerknoten (10), der wenigstens zwei Ein-/Ausgabe-Schnittstellen (101, 102, 103, 104) zum Senden und Empfangen von echtzeitrelevanten und nicht-echtzeitrelevanten Datenpaketen, die jeweils eine Empfangseinheit (RX) zum Empfangen von Datenpaketen und eine Sendeeinheit (TX) zum Senden von Datenpaketen umfassen, und eine mit den zwei Ein-/Ausgabe-Schnittstellen verbundenen Vermittlungseinrichtung (105), die eine Vermittlungstabelle (106) umfasst, aufweist, wobei jede Ein-/Ausgabe-Schnittstelle des Verteilerknotens mit wenigstens einem Knoten verbunden ist und der Verteilerknoten über eine Ein-/Ausgabe-Schnittstelle empfangene Datenpakete über eine weitere Ein-/Ausgabe-Schnittstelle mit Hilfe der Vermittlungstabelle (106) versendet, wobei die Vermittlungstabelle für jedes echtzeitrelevante Datenpaket wenigstens eine Datenpaketkennung und einen Sendezeitpunkt in einem Datenübermittlungszyklus enthält,
wobei die Vermittlungseinrichtung beim Empfang eines echtzeitrelevanten Datenpakets eine Datenpaketkennung erfasst, wobei die Vermittlungseinrichtung (105) das echtzeitrelevante Datenpaket zu dem der erfassten Datenpaketkennung in der Vermittlungstabelle (106) zugeordneten Sendezeitpunkt über eine als Sende-Schnittstelle vorgesehene Ein-/Ausgabe-Schnittstelle ausgibt,
**dadurch gekennzeichnet,**
**dass** die Vermittlungseinrichtung (105) des Verteilerknotens beim Empfang eines nicht-echtzeitrelevanten Datenpakets die Länge des nicht-echtzeitrelevanten Datenpakets erfasst, um die sich daraus ergebende Sendezeitdauer für das nicht-echtzeitrelevante Datenpaket zu ermitteln,
**dass** die Vermittlungseinrichtung (105) des Verteilerknotens zumindest dann, wenn in der Vermittlungstabelle (106) eine Ein-/Ausgabe-Schnittstelle für ein nicht-echtzeitrelevantes Datenpaket als Sende-Schnittstelle vorgesehen ist und die Ein-/Ausgabe-Schnittstelle sich im sendefreien Zustand befindet, die für die jeweilige Ein-/Ausgabe-Schnittstelle bis zum Versenden des nächsten echtzeitrelevanten Datenpakets verbleibende Sendepausen-Zeitdauer erfasst und überprüft, ob für die Ein-/Ausgabe-Schnittstelle als Sende-Schnittstelle ein nicht-echtzeitrelevantes Datenpaket mit einer Sendezeitdauer, die höchstens der Sendepausen-Zeitdauer entspricht, vorliegt, um bei einem positiven Prüfergebnis ein nicht-echtzeitrelevantes Datenpaket über die Ein-/Ausgabe-Schnittstelle zu versenden,
**dass** die Vermittlungseinrichtung (105) des Verteilerknotens (10) ein nicht-echtzeitrelevantes Datenpaket zwischenspeichert, wenn die in der Vermittlungstabelle (106) zugeordnete Sende-Schnittstelle zum Versenden des nicht-echtzeitrelevanten Datenpakets nicht freigeben ist, und
**dass** die Vermittlungseinrichtung (105) des Verteilerknotens (10) die Sendepausen-Zeitdauer einer zum Senden freien Ein-/Ausgabe-Schnittstelle mit der Sendezeitdauer von der Ein-/Ausgabe-Schnittstelle als Sende-Schnittstelle in der Vermittlungstabelle (106) zugeordneten nicht-echtzeitrelevanten Datenpaketen vergleicht, um aus den nicht-echtzeitrelevanten Datenpaketen, deren Sendezeitdauer höchstens der Sendepausen-Zeitdauer entspricht, nach wenigstens einem vorgegebenen Kriterium ein zu versendendes nicht-echtzeitrelevantes Datenpaket auszuwählen.

5. Verfahren nach Anspruch 4, wobei ein Auswahlkriterium die Sendezeitdauer und/oder eine Verweildauer im Verteilerknoten ist.

6. Verfahren nach Anspruch 4 oder 5, wobei die Datenübermittlung der echtzeitrelevanten und der nicht-echtzeitrelevanten Datenpakete in dem einzelnen Datenübermittlungszyklus erfolgt.

7. Verfahren nach einem der Ansprüche 4 bis 6, wobei die Datenpakete Ethernet-Telegramme (20) sind und wobei bei nicht-echtzeitrelevanten Ethernet-Telegrammen in einem Kopfabschnitt des Datenbereiches ein Datenfeld (215) für die Längeninformation vorgesehen ist.

8. Verfahren nach einem der Ansprüche 4 bis 7, wobei die Datenpakete Ethernet-Telegramme (20) sind und wobei bei nicht-echtzeitrelevanten Ethernet-Telegrammen in einem Zieladressenabschnitt (211) im Kopfbereich (21) ein Datenfeld (214) für die Längeninformation vorgesehen ist.

## Claims

1. Distribution node (10) for an automation network, having
at least two input/output interfaces (101, 102, 103, 104) for transmitting and receiving real-time-relevant and non-real-time-relevant data packets, which interfaces each have a receiving unit (RX) for receiving data packets and a transmitting unit (TX) for transmitting data packets, and
a switching device (105) which is connected to the input/output interfaces and comprises a switching table (106),
the switching device (105) being designed to transmit data packets, which are received via an input/output interface, via a further input/output interface with the aid of the switching table (106),
the switching table containing, for each real-time-relevant data packet, at least one data packet identifier and a transmission time in a data transmission cycle,
the switching device (105) being designed to detect a data packet identifier upon receiving a real-time-relevant data packet,
the switching device (105) being designed to output the real-time-relevant data packet at the transmission time assigned to the detected data packet identifier in the switching table (106) via an input/output interface provided as a transmission interface,
**characterized**
**in that** the switching device (105) is designed, upon receiving a non-real-time-relevant data packet, to detect the length of the non-real-time-relevant data packet in order to determine the resulting transmission period for the non-real-time-relevant data packet,
**in that** the switching device (105) is designed, at least when an input/output interface is provided as a transmission interface for a non-real-time-relevant data packet in the switching table (106) and the input/output interface is in the transmission-free state, to detect the transmission pause period remaining until the transmission of the next real-time-relevant data packet for the respective input/output interface and to check whether a non-real-time-relevant data packet having a transmission period which at most corresponds to the transmission pause period is present for the input/output interface as the transmission interface in order to transmit a non-real-time-relevant data packet via the input/output interface in the event of a positive check result,
**in that** the switching device (105) is designed to buffer a non-real-time-relevant data packet if the transmission interface for the non-real-time-relevant data packet, which is assigned in the switching table (106), has not been released for transmission, and
**in that** the switching device (105) is designed to compare the transmission pause period of an input/output interface free for transmission with the transmission period of non-real-time-relevant data packets which are assigned to the input/output interface in the switching table (106) as the transmission interface and are present in the switching device in order to select a non-real-time-relevant data packet to be transmitted from the non-real-time-relevant data packets whose transmission period corresponds at most to the transmission pause period according to at least one predefined criterion.

2. Distribution node according to Claim 1, a selection criterion being the transmission period and/or a residence time in the distribution node.

3. Automation network having a distribution node (10) according to Claim 1 or 2, each input/output interface (101, 102, 103, 104) being connected to at least one node (11, 12, 13, 14), and the data transmission of the real-time-relevant data packets and of the non-real-time-relevant data packets being carried out with the individual data transmission cycle.

4. Method for transmitting real-time-relevant and non-real-time-relevant data packets in an automation network having a plurality of nodes (11, 12, 13, 14) and a distribution node (10) which has at least two input/output interfaces (101, 102, 103, 104) for transmitting and receiving real-time-relevant and non-real-time-relevant data packets, which interfaces each comprise a receiving unit (RX) for receiving data packets and a transmitting unit (TX) for transmitting data packets, and a switching device (105) which is connected to the two input/output interfaces and comprises a switching table (106), each input/output interface of the distribution node being connected to at least one node, and the distribution node transmitting data packets, which are received via an input/output interface, via a further input/output interface with the aid of the switching table (106), the switching table containing, for each real-time-relevant data packet, at least one data packet identifier and a transmission time in a data transmission cycle,
the switching device detecting a data packet identifier upon receiving a real-time-relevant data packet,
the switching device (105) outputting the real-time-relevant data packet at the transmission time assigned to the detected data packet identifier in the switching table (106) via an input/output interface provided as a transmission interface,
**characterized**
**in that** the switching device (105) of the distribution node, upon receiving a non-real-time-relevant data packet, detects the length of the non-real-time-relevant data packet in order to determine the resulting transmission period for the non-real-time-relevant data packet,
**in that** the switching device (105) of the distribution node, at least when an input/output interface is provided as a transmission interface for a non-real-time-relevant data packet in the switching table (106) and the input/output interface is in the transmission-free state, detects the transmission pause period remaining until the transmission of the next real-time-relevant data packet for the respective input/output interface and checks whether a non-real-time-relevant data packet having a transmission period which at most corresponds to the transmission pause period is present for the input/output interface as the transmission interface in order to transmit a non-real-time-relevant data packet via the input/output interface in the event of a positive check result,
**in that** the switching device (105) of the distribution node (10) buffers a non-real-time-relevant data packet if the transmission interface which is assigned in the switching table (106) has not been released for transmitting the non-real-time-relevant data packet, and
**in that** the switching device (105) of the distribution node (10) compares the transmission pause period of an input/output interface free for transmission with the transmission period of non-real-time-relevant data packets which are assigned to the input/output interface as the transmission interface in the switching table (106) in order to select a non-real-time-relevant data packet to be transmitted from the non-real-time-relevant data packets whose transmission period corresponds at most to the transmission pause period according to at least one predefined criterion.

5. Method according to Claim 4, a selection criterion being the transmission period and/or a residence time in the distribution node.

6. Method according to Claim 4 or 5, the data transmission of the real-time-relevant data packets and of the non-real-time-relevant data packets being carried out in the individual data transmission cycle.

7. Method according to one of Claims 4 to 6, the data packets being Ethernet messages (20) and a data field (215) for the length information being provided in non-real-time-relevant Ethernet messages in a header section of the data area.

8. Method according to one of Claims 4 to 7, the data packets being Ethernet messages (20) and a data field (214) for the length information being provided in non-real-time-relevant Ethernet messages in a destination address section (211) in the header area (21).

## Revendications

1. Noeud de distribution (10) pour un réseau d'automatisation avec au moins deux interfaces d'entrée/sortie (101, 102, 103, 104) pour l'émission et la réception de paquets de données pertinents concernant le temps réel et non pertinents concernant le temps réel qui présentent respectivement une unité de réception (RX) pour réceptionner des paquets de données et une unité d'émission (TX) pour envoyer des paquets de données, et un dispositif de transmission (105) relié aux interfaces d'entrée/sortie, lequel comprend un tableau de transmission (106),
dans lequel le dispositif de transmission (105) est étudié pour envoyer des paquets de données, réceptionnés via une interface d'entrée/sortie, via une autre interface d'entrée/sortie à l'aide du tableau de transmission (106),
dans lequel le tableau de transmission contient, pour chaque paquet de données pertinent concernant le temps réel, au moins une identification de paquet de données et un moment d'émission dans un cycle de transmission de données,
dans lequel le dispositif de transmission (105) est étudié, lors de la réception d'un paquet de données pertinent concernant le temps réel, pour détecter une identification de paquet de données,
dans lequel le dispositif de transmission (105) est étudié pour faire sortir le paquet de données pertinent concernant le temps réel au moment d'émission associé à l'indentification de paquet de données détectée dans le tableau de transmission (106) via une interface d'entrée/sortie prévue en tant qu'interface d'émission,
**caractérisé en ce**
**que** le dispositif de transmission (105) est étudié, lors de la réception d'un paquet de données non pertinent concernant le temps réel, pour détecter la longueur du paquet de données non pertinent concernant le temps réel pour déterminer la durée d'émission qui en résulte pour le paquet de données non pertinent concernant le temps réel, que le dispositif de transmission (105) est étudié, au moins lorsque l'on prévoit dans le tableau de transmission (106) une interface d'entrée/sortie pour un paquet de données non pertinent concernant le temps réel en tant qu'interface d'émission et l'interface d'entrée/sortie se trouve à l'état libre d'émission, pour détecter la durée de pauses d'émission résiduelle jusqu'à l'envoi du paquet de données pertinent concernant le temps réel suivant pour l'interface d'entrée/ sortie respective et vérifier s'il y a, pour l'interface d'entrée/sortie en tant qu'interface d'émission, un paquet de données non pertinent concernant le temps réel avec une durée d'émission qui correspond tout au plus à la durée de pauses d'émission pour, en cas de résultat de vérification positif, envoyer un paquet de données non pertinent concernant le temps réel via l'interface d'entrée/sortie,
**que** le dispositif de transmission (105) est étudié pour le stockage intermédiaire d'un paquet de données non pertinent concernant le temps réel lorsque l'interface d'émission associée dans le tableau de transmission (106) du paquet de données non pertinent concernant le temps réel n'est pas libérée pour l'envoi, et
**que** le dispositif de transmission (105) est étudié pour comparer la durée de pauses d'émission d'une interface d'entrée/sortie libre pour l'émission avec la durée d'émission de paquets de données non pertinents concernant le temps réel présents dans le dispositif de transmission associés à l'interface d'entrée/sortie dans le tableau de transmission (106) en tant qu'interface d'émission, pour choisir parmi les paquets de données non pertinents concernant le temps réel dont la durée d'émission correspond tout au plus à la durée de pauses d'émission, d'après au moins un critère prescrit, un paquet de données non pertinent concernant le temps réel à envoyer.

2. Noeud de distribution selon la revendication 1, dans lequel un critère de sélection est la durée d'émission et/ou une durée de séjour dans le noeud de distribution.

3. Réseau d'automatisation avec un noeud de distribution (10) selon la revendication 1 ou 2, dans lequel chaque interface d'entrée/sortie (101, 102, 103, 104) est reliée à au moins un noeud (11, 12, 13, 14) et dans lequel la transmission de données des paquets de données pertinents concernant le temps réel et non pertinents concernant le temps réel s'effectue avec le cycle de transmission de données individuel.

4. Procédé pour la transmission de paquets de données pertinents concernant le temps réel et non pertinents concernant le temps réel dans un réseau d'automatisation avec plusieurs noeuds (11, 12, 13, 14) et un noeud de distribution (10) qui présente au moins deux interfaces d'entrée/sortie (101, 102, 103, 104) pour l'émission et la réception de paquets de données pertinents concernant le temps réel et non pertinents concernant le temps réel qui comprennent respectivement une unité de réception (RX) pour la réception de paquets de données et une unité d'émission (TX) pour l'émission de paquets de données, et un dispositif de transmission (105) relié aux deux interfaces d'entrée/sortie, lequel comprend un tableau de transmission (106), dans lequel chaque interface d'entrée/sortie du noeud de distribution est reliée à au moins un noeud et le noeud de distribution envoie des paquets de données, réceptionnés via une interface d'entrée/sortie, via une autre interface d'entrée/sortie à l'aide du tableau de distribution (106), dans lequel le tableau de transmission contient, pour chaque paquet de données pertinent concernant le temps réel, au moins une identification de paquet de données et un moment d'émission dans un cycle de transmission de données,
dans lequel, à la réception d'un paquet de données pertinent concernant le temps réel, le dispositif de transmission détecte une identification de paquet de données, dans lequel le dispositif de transmission (105) fait sortir le paquet de données pertinent concernant le temps réel au moment d'émission associé à l'identification de paquet de données détectée dans le tableau de transmission (106) via une interface d'entrée/sortie prévue en tant qu'interface d'émission,
**caractérisé en ce,**
**qu'**à la réception d'un paquet de données non pertinent concernant le temps réel, le dispositif de transmission (105) du noeud de distribution détecte la longueur du paquet de données non pertinent concernant le temps réel pour déterminer la durée d'émission qui en résulte pour le paquet de données non pertinent concernant le temps réel, qu'au moins lorsqu'une interface d'entrée/sortie pour un paquet de données non pertinent concernant le temps réel en tant qu'interface d'émission est prévue dans le tableau de transmission (106) et l'interface d'entrée/sortie se trouve à l'état libre d'émission, le dispositif de transmission (105) du noeud de distribution détecte la durée de pauses d'émission résiduelle pour l'interface d'entrée/sortie respective jusqu'à l'envoi du paquet de données pertinent concernant le temps réel suivant et vérifie s'il y a, pour une interface d'entrée/sortie en tant qu'interface d'émission, un paquet de données non pertinent concernant le temps réel avec une durée d'émission qui correspond tout au plus à la durée de pauses d'émission pour, en cas de résultat de vérification positif, envoyer un paquet de données non pertinent concernant le temps réel via une interface d'entrée/sortie,
**que** le dispositif de transmission (105) du noeud de distribution (10) procède au stockage intermédiaire d'un paquet de données non pertinent concernant le temps réel lorsque l'interface d'émission associée dans le tableau de transmission (106) pour l'envoi du paquet de données non pertinent concernant le temps réel n'est pas libérée, et
**que** le dispositif de transmission (105) du noeud de distribution (10) compare la durée de pauses d'émission d'une interface d'entrée/sortie libre pour l'émission avec la durée d'émission de paquets de données non pertinents concernant le temps réel associés à l'interface d'entrée/sortie dans le tableau de transmission (106) en tant qu'interface d'émission, pour choisir parmi les paquets de données non pertinents concernant le temps réel dont la durée d'émission correspond tout au plus à la durée de pauses d'émission, d'après au moins un critère prescrit, un paquet de données non pertinent concernant le temps réel à envoyer.

5. Procédé selon la revendication 4, dans lequel un critère de sélection est la durée d'émission et/ou une durée de séjour dans le noeud de distribution.

6. Procédé selon la revendication 4 ou 5, dans lequel la transmission de données des paquets de données pertinents concernant le temps réel et non pertinents concernant le temps réel s'effectue dans le cycle de transmission de données individuel.

7. Procédé selon l'une des revendications 4 à 6, dans lequel les paquets de données sont des télégrammes Ethernet (20) et dans lequel, en cas de télégrammes Ethernet non pertinents concernant le temps réel, dans une partie de tête de la zone de données, un champ de données (215) est prévu pour l'information de longueur.

8. Procédé selon l'une des revendications 4 à 7, dans lequel les paquets de données sont des télégrammes Ethernet (20) et dans lequel, en cas de télégrammes Ethernet non pertinents concernant le temps réel, dans une partie d'adresses cible (211) dans la zone de tête (21), un champ de données (214) est prévu pour l'information de longueur.
